# EUROPÄISCHE PATENTSCHRIFT

(11) **EP 2 221 490 B1**
(45) Veröffentlichungstag und Bekanntmachung des Hinweises auf die Patenterteilung: **24.09.2014**
(21) Anmeldenummer: 10152113.6
(22) Anmeldetag: 29.01.2010
(51) Int. Cl.: F16B 37/04

(54) **Einteiliges Befestigungselement zur Anordnung eines Stangenelementes an einer Montageschiene**
Single part fastening element for assembling a rod element to a fitting rail
Elément de fixation en une pièce destiné à l'agencement d'un élément de tiges sur un rail de montage

(30) Priorität: 11.02.2009 DE 102009000757
(43) Veröffentlichungstag der Anmeldung: 25.08.2010
(73) Patentinhaber: HILTI Aktiengesellschaft, 9494 Schaan (LI)
(72) Erfinder: Merhar, Thomas, 9494, Schaan (LI)
(74) Vertreter: Hilti Aktiengesellschaft Corporate Intellectual Property

(56) Entgegenhaltungen:
- EP-A1- 0 826 889

## Beschreibung

Die Erfindung betrifft ein einteiliges Befestigungselement zur Anordnung eines Stangenelementes an einer Montageschiene, der im Oberbegriff des Patentanspruchs 1 genannten Art.

Im Gebiet der Haustechnik werden Schienensysteme eingesetzt, an denen Leitungen z. B. für Wasser-, Heizung-, Lüftung-, Klima- und/oder Elektroinstallationen einfach über entsprechende Befestigungselemente, wie beispielsweise mit Rohrschellen und Schienenmuttern festlegbar sind. An Schienensystemen werden auch Vorrichtungen zur Abhängung von Bauteilen vorgesehen, deren Stangenelemente ebenfalls mit geeigneten Befestigungselementen an den Schienensystemen festlegbar sind.

Für ein solches Schienensystem wird oftmals eine so genannte C-förmige Montageschiene verwendet, wie sie beispielsweise aus der DE 87 15 256 U1 bekannt ist. Der von der Montageschiene umschlossene Innenraum ist über eine entlang der Längserstreckung der Montageschiene verlaufende Montageöffnung von aussen her zugänglich, welche von Rändern seitlich begrenzt ist. Die Montageöffnung weist eine quer zu der Längserstreckung der Montageschiene verlaufende lichte Breite auf, die kleiner als die entsprechende Innenabmessung des Innenraums der Montageschiene ist.

Aus der EP 0 826 889 A1 ist ein einteiliges Befestigungselement zur Anordnung eines Stangenelementes an einer Montageschiene bekannt, wobei das Stangenelement zumindest bereichsweise ein Gewinde aufweist. Das Befestigungselement weist einen Hintergreifabschnitt zum Einführen in die Montageöffnung und Hintergreifen von Rändern einer Montageöffnung der Montageschiene auf, der zwei einander gegenüberliegende Spannflächen aufweist, die im verspannten Zustand des Befestigungselementes mit Abschnitten der Ränder der Montageöffnung in Anlage sind. Weiter weist das Befestigungselement einen Anlageabschnitt zur aussenseitigen Anlage an der Montageschiene, wobei der Hintergreifabschnitt über einen Verbindungsabschnitt mit dem Anlageabschnitt in einem Abstand zu diesem verbunden ist, und eine mit einem Innengewinde versehene Öffnung für den mit dem Gewinde versehenen Abschnitt des Stangenelementes auf. Das Hintergreifteil weist eine Breite, die kleiner als die lichte Breite der Montageöffnung ist, und eine Länge auf, die grösser als die lichte Breite der Montageöffnung ist. Das bekannte Befestigungselement ist einfach, z. B. in einem Stanz-/Biegeverfahren fertigbar.

Zum Verspannen des Befestigungselementes an der Montageschiene wird ein zuvor mit einem Mutterelement versehenes Stangenelement in die Öffnung des Befestigungselementes eingeschraubt, der Hintergreifabschnitt in die Montageschiene eingeführt, anschliessend der Hintergreifabschnitt in der Montageschiene in eine Stellung zum Hintergreifen der Ränder der Montageöffnung verdreht sowie dann mittels des zuvor an dem Stangenelement angeordneten Mutterelementes an der Montageschiene verspannt.

Aufgabe der Erfindung ist es, das bekannte Befestigungselement dahingehend zu verbessern, dass dieses noch einfacher montierbar und somit leichter handhabbar ist.

Die Aufgabe ist durch die Merkmale des unabhängigen Anspruchs gelöst. Vorteilhafte Weiterbildungen sind in den Unteransprüchen dargelegt.

Gemäss der Erfindung weist jede Spannfläche des Hintergreifabschnitts jeweils einen Einführabschnitt, der einen ersten Winkel mit einer von dem Anlageabschnitt aufgespannten Ebene einschliesst, und einen daran anschliessenden Klemmabschnitt auf, der einen zweiten Winkel mit der von dem Anlageabschnitt aufgespannten Ebene einschliesst, wobei der erste Winkel grösser als der zweite Winkel ist.

Der Abstand zwischen dem Klemmabschnitt des Hintergreifabschnitts und dem Anlageabschnitt ist vorteilhaft derart gewählt, dass dieser kleiner als die Distanz eines freien Endes des Randes der Montageöffnung bis zur entsprechenden Aussenseite der Montageschiene ist, an welcher die Montageöffnung angeordnet ist. In einer Vormontagestellung des Befestigungselementes, in welcher der Hintergreifabschnitt nach dem Einführen in die Montageöffnung um einen gewissen Winkelbetrag verdreht ist, kommen die Einführabschnitte des Hintergreifabschnitts unter die freien Enden der Ränder der Montageöffnung zu liegen. In dieser Stellung ist das Befestigungselement weiterhin entlang der Montageöffnung verschiebbar, jedoch unverlierbar in dieser angeordnet. Wird das Befestigungselement weiter verdreht, kommen die Klemmabschnitte des Hintergreifabschnitts mit den freien Enden der Ränder der Montageöffnung in klemmender Anlage, womit das Befestigungselement in einer Fixierstellung sicher an der Montageschiene gehalten ist. Das Stangenelement wird dann in die mit einem Innengewinde versehene Öffnung eingeschraubt und vorteilhaft noch mit einer Kontermutter an dem Befestigungselement gesichert.

Das erfindungsgemässe Befestigungselement ist einfach werkzeuglos montierbar, justierbar und demontierbar. Beim Umpositionieren des Befestigungselementes ist eine Selbsthemmung an der Montageschiene gegeben, was das Handling des Befestigungselementes insbesondere bei Überkopfanwendungen massgeblich erleichtert.

Vorzugsweise schliesst eine zwischen dem Einführabschnitt und dem Klemmabschnitt verlaufende Übergangskante am Hintergreifabschnitt mit einer Längsachse des Befestigungselementes einen Winkel von 35° bis 55°, vorteilhaft von 40° bis 50° ein. Die Ausrichtung der Übergangskante definiert den optimalen Verdrehwinkel zur Überführung des Befestigungselementes von der Einführstellung in die Vormontagestellung.

Bevorzugt ist ein erstes Anschlagmittel zur Anlage an einer Innenseite eines Randes der Montageöffnung in einer Vormontagestellung des Befestigungselementes vorgesehen, welches nach dem Überführen des Befestigungselementes von der Einführstellung in die Vormontagestellung ein ungewolltes Zurückdrehen des Befestigungselementes und somit ein Herausfallen eines vormontierten Befestigungselementes aus der Montageschiene verhindert.

Vorzugsweise ist das erste Anschlagmittel von einem von dem Anlageabschnitt abragenden Halteabschnitt gebildet, der in einem Winkel dem Hintergreifabschnitt zugewandt ausgerichtet ist. Beim Überführen des Befestigungselementes von der Einführstellung in die Vormontagestellung gleitet der Halteabschnitt über die Aussenseite der Montageschiene, welche sich an die Montageöffnung anschliesst, in die Montageöffnung. Hat das Befestigungselement eine Tendenz zur Rückkehr in die Einführstellung oder wird ein fixiertes Befestigungselement für eine Umpositionierung gelöst, schlägt der Halteabschnitt an der Innenseite der Montageöffnung an und begrenzt dadurch die Verdrehbarkeit des Befestigungselementes in Richtung der Einführstellung.

Bevorzugt ist zumindest ein zweites Anschlagmittel zur Anlage an einer Innenseite eines Randes der Montageöffnung in einer Fixierstellung des Befestigungselementes vorgesehen, welches nach dem Überführen des Befestigungselementes von der Einführstellung beziehungsweise von der Vormontagestellung in die Fixierstellung ein ungewolltes Zurückdrehen und Lösen des Befestigungselementes verhindert.

Vorzugsweise ist das zweite Anschlagmittel von einem von dem Anlageabschnitt abragenden Sicherungsabschnitt gebildet, der in einem Winkel dem Hintergreifabschnitt zugewandt ausgerichtet ist. Beim Überführen des Befestigungselementes von der Einführstellung beziehungsweise von der Vormontagestellung in die Fixierstellung gleitet der Sicherungsabschnitt über die Aussenseite der Montageschiene, welche sich an die Montageöffnung anschliesst, in die Montageöffnung. Hat das Befestigungselement eine Tendenz zur Rückkehr in die Vormontagestellung, schlägt der Sicherungsabschnitt an der Innenseite der Montageöffnung an und begrenzt dadurch die Verdrehbarkeit des Befestigungselementes in Richtung der Vormontagestellung.

Alternativ ist das erste Anschlagmittel und/oder das zweite Anschlagmittel von einer in Richtung des Hintergreifabschnitts ausgerichteten Vertiefung gebildet, welche beispielsweise als Sicke ausgebildet ist. Der Bodenabschnitt der entsprechenden Vertiefung gleitet bei der Anordnung des Befestigungselementes jeweils über die Aussenseite der Montageschiene, welche sich an die Montageöffnung anschliesst, und dringt entsprechend der Stellung des Befestigungselementes in die Montageöffnung ein.

Bevorzugt ist zumindest ein von dem Anlageabschnitt abragender, in der von dem Anlageabschnitt aufgespannten Ebene verlaufender Betätigungsabschnitt vorgesehen, welcher einen Betätigungshebel ausbildet und somit eine einfache Montage des Befestigungselementes an der Montageschiene von Hand ermöglicht. Vorteilhaft ist zumindest eine Drückfläche und/oder ein Ergreifabschnitt an dem zumindest einen Betätigungsabschnitt vorgesehen, welche das Handling des Befestigungselementes weiter verbessern.

Vorzugsweise sind mehrere Betätigungsabschnitte vorgesehen, die an einander diametral gegenüberliegenden Bereichen des Anlageabschnitts vorgesehen sind, womit zumindest zwei einander gegenüberliegende Angriffspunkte zur Krafteinleitung bei der Anordnung des Befestigungselementes an der Montageschiene vorhanden sind und somit eine manuelle Betätigung des Befestigungselementes weiter vereinfacht ist.

Die Erfindung wird nachstehend anhand von Ausführungsbeispielen näher erläutert. Es zeigen:
- Fig. 1: Ein erstes Ausführungsbeispiel eines Befestigungselementes an einer Montageschiene in drei unterschiedlichen Montagezuständen in einer Aufsicht;
- Fig. 2: das in Fig. 1 gezeigte Befestigungselement in einer Aufsicht;
- Fig. 3: das in Fig. 2 dargestellte Befestigungselement in einem Schnitt gem. Linie III-III in Fig. 2 in der Fixierstellung des Befestigungselementes an der Montageschiene;
- Fig. 4: das in Fig. 2 dargestellte Befestigungselement in einer Seitenansicht;
- Fig. 5: ein zweites Ausführungsbeispiel eines Befestigungselementes in einer Aufsicht; und
- Fig. 6A/B: ein drittes Ausführungsbeispiel eines Befestigungselementes in einer Aufsicht, einmal in seiner Einführstellung und einmal in seiner Fixierstellung..
Grundsätzlich sind in den Figuren gleiche Teile mit den gleichen Bezugszeichen versehen.

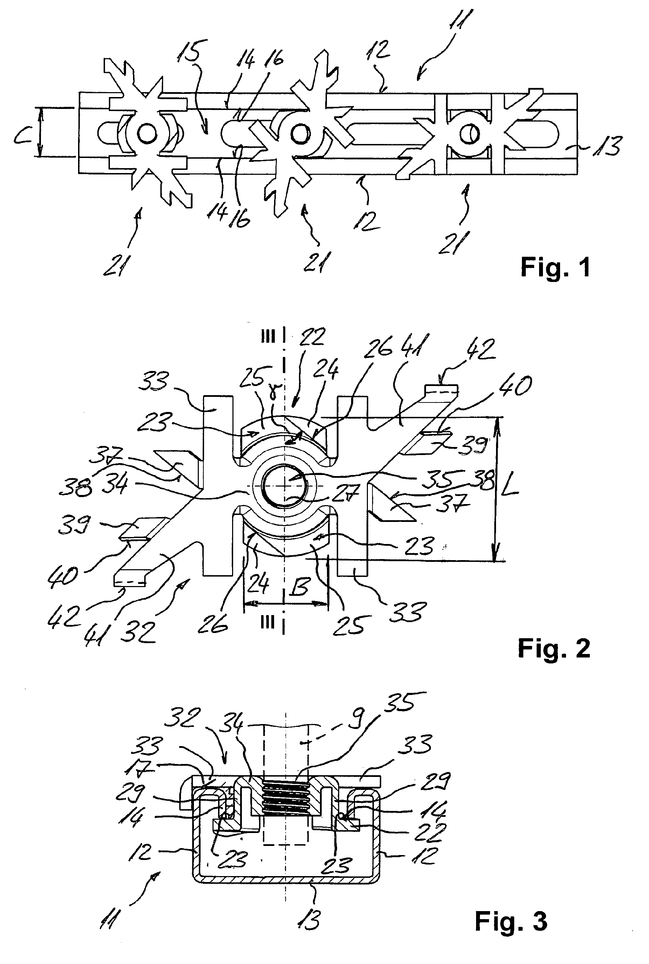

Das in den Figuren 1 bis 4 dargestellte einteilige Befestigungselement 21 dient der Anordnung eines Stangenelementes 9, wie eine Gewindestange, an einer Montageschiene 11. Das Befestigungselement 21 ist in einem Stanz-/Biegeverfahren aus einem Metallblech hergestellt.

Die Montageschiene 11 weist zwei einander gegenüberliegende Seitenwände 12, eine diese Seitenwände 12 verbindende Rückwand 13 sowie dieser Rückwand 13 gegenüberliegend eine von Rändern 14 begrenzte, in der Längserstreckung der Montageschiene 11 verlaufende Montageöffnung 15 auf. Die Montageöffnung 15 weist eine quer zu der Längserstreckung der Montageschiene 11 verlaufende lichte Breite C auf, welche durch die nach innen umgebogenen freien Enden der Ränder 14 definiert ist. Die Ränder 14 der Montageöffnung 15 weisen jeweils einander zugewandte Innenseiten 16 auf. Die Montageschiene 11 umgibt einen Innenraum, der durch die Montageöffnung 15 von aussen her zugänglich ist.

Das Befestigungselement 21 weist einen Hintergreifabschnitt 22 mit einer Breite B, die kleiner als die lichte Breite C der Montageöffnung 15 in der Montageschiene 11 ist, und eine Länge L auf, die grösser als die lichte Breite C der Montageöffnung 15 in der Montageschiene 11 ist. Der Hintergreifabschnitt 22 ist über zwei Verbindungsabschnitte 29 mit einem Anlageabschnitt 32 in einem Abstand A zu diesem verbunden und weist zwei einander gegenüberliegende Spannflächen auf. Der Abstand A entspricht im Wesentlichen der Distanz gemessen vom freien Ende eines Randes 14 der Montageöffnung 15 bis zur Aussenseite 17 der Montageschiene 11, welche die Montageöffnung 15 aufweist. An jeder der Spannflächen 23 ist jeweils ein Einführabschnitt 24, der einen ersten Winkel a (Alpha) mit einer von dem Anlageabschnitt 32 aufgespannten Ebene G einschliesst, und einen daran anschliessenden Klemmabschnitt 25 vorgesehen, der einen zweiten Winkel β (Beta) mit der von dem Anlageabschnitt 32 aufgespannten Ebene G einschliesst, wobei der erste Winkel α (Alpha) grösser als der zweite Winkel β (Beta) ist und vorteilhaft 45° nicht übersteigt. Der Winkel β (Beta) liegt vorteilhaft im Bereich von 0.5° bis 5°, besonders vorteilhaft im Bereich von 2° bis 3°.

Im verspannten Zustand des Befestigungselementes sind die Klemmabschnitte 25 mit Abschnitten der Ränder 14 der Montageöffnung 15 in Anlage. Die Einführabschnitte 24 sowie die Klemmabschnitte 25 der beiden Spannflächen 23 sind jeweils einander diametral gegenüberliegend angeordnet. Eine zwischen dem Einführabschnitt 24 und dem Klemmabschnitt 25 verlaufende Übergangskante 26 am Hintergreifabschnitt 22 schliesst mit einer Längsachse 27 des Befestigungselementes 21 einen Winkel γ (Gamma) von etwa 45° ein. Unter der Längsachse 27 des Befestigungselementes 21 wird in diesem Zusammenhang die Mittelachse des Befestigungselementes 21 verstanden, welche in der Einführstellung des Befestigungselementes 21 an der Montageschiene 11 in Richtung der Längserstreckung der Montageschiene 11 verläuft.

Weiter umfasst das Befestigungselement 21 einen Anlageabschnitt 32 zur aussenseitigen Anlage an der Aussenseite 17 der Montageschiene 11, der zwei parallel zueinander verlaufende Anlageabschnitte 33 und einen diese verbindenden Mittelabschnitt 34 aufweist. Im Mittelabschnitt 34 ist ein in Richtung des Hintergreifabschnitts 22 ausgerichteter Durchzug vorgesehen, der eine Öffnung 35 ausbildet. Die Öffnung 35 ist mit einem Innengewinde zur Anordnung des mit dem Gewinde versehenen Abschnitts des Stangenelementes 9 versehen.

Von dem Anlageabschnitt 32 ragen zwei einander diametral gegenüberliegende Halteabschnitte 37 als erste Anschlagmittel ab, die in einem Winkel dem Hintergreifabschnitt 22 zugewandt ausgerichtet sind und die in einer Vormontagestellung des Befestigungselementes 21 jeweils mit ihrer Anlageseite 38 an einer der Innenseiten 16 der Ränder 14 der Montageöffnung 15 anliegen. Die Anlageseite 38 eines Halteabschnitts 37 verläuft in einer Verlängerung der entsprechenden Übergangskante 26 der Spannfläche 23 des Hintergreifabschnitts 22. Die freien Enden der Halteabschnitte 37 sind in einem an der Montageschiene 11 angeordneten Zustand in Richtung der Rückwand 13 zugewandt und liegen unterhalb der von dem Anlageabschnitt 32 aufgespannten Ebene G.

Von dem Anlageabschnitt 32 ragen weiter zwei einander diametral gegenüberliegende Sicherungsabschnitte 39 als zweite Anschlagmittel ab, die in einem Winkel dem Hintergreifabschnitt 22 zugewandt ausgerichtet sind und die in einer Fixierstellung des Befestigungselementes 21 jeweils mit ihrer Anlageseite 40 an einer der Innenseiten 16 der Ränder 14 der Montageöffnung 15 anliegen. Die Anlageseite 40 eines Sicherungsabschnitts 39 verläuft senkrecht zu der Längserstreckung der Anlageabschnitte 33 des Anlageabschnitt 32. Der Abstand der Anschlagseiten 40 der Sicherungsabschnitte 39 zueinander ist etwas kleiner als die lichte Breite C der Montageöffnung 15 der Montageschiene 11. Die freien Enden der Sicherungsabschnitte 39 sind in einem an der Montageschiene 11 angeordneten Zustand in Richtung der Rückwand 13 zugewandt und liegen unterhalb der von der von dem Anlageabschnitt 32 aufgespannten Ebene G.

Zudem ragen von dem Anlageabschnitt 32 zwei in der von dem Anlageabschnitt 32 aufgespannten Ebene G verlaufende Betätigungsabschnitte 41 ab, die an einander diametral gegenüberliegenden Bereichen des Anlageabschnitts 32 vorgesehen sind. An den freien Enden der Betätigungsabschnitte 41 sind in Richtung des Hintergreifabschnitts 22 ausgerichtete Ergreifabschnitte 42 vorgesehen, welche Druckflächen für eine einfache Montage des Befestigungselementes 21 an der Montageschiene 11 und gleichzeitig Anschläge ausbilden, die in der Fixierstellung des Befestigungselementes 21 an der Aussenseite der Seitenwände 12 der Montageschiene 11 in Anlage kommen können und somit eine Überdrehung des Befestigungselementes 21 bei der Montage verhindern.

Anhand der Fig. 1 wird nachfolgend ein Montagevorgang für das Befestigungselement 21 dargelegt.

Das in Bezug auf die Figur 1 linke Befestigungselement 21 ist in seiner Einführstellung dargestellt. Zuerst wird der Hintergreifabschnitt 22 durch die Montageöffnung 15 in die Montageschiene 11 eingeführt, bis die Anlageabschnitte 33 des Anlageabschnitts 32 an der Aussenseite 17 der Montageschiene 11 anliegen. Die Längserstreckung der Anlageabschnitte 33 verläuft in dieser Stellung des Befestigungselementes 21 im Wesentlichen in Richtung der Längserstreckung der Montageschiene 11.

Zum Überführen des Befestigungselementes 21 in eine Vormontagestellung, wie sie in Bezug auf die Figur 1 bei dem Befestigungselement 21 in der Mitte dargestellt ist, wird das Befestigungselement 21 anschliessend in Richtung des Uhrzeigersinns um etwa 45° verdreht, wobei die Einführabschnitte 24 der Spannflächen 23 des Hintergreifabschnitts 22 unter die freien Enden der Ränder 14 der Montageöffnung 15 zu liegen kommen. Beim Verdrehen gleiten die freien Enden der, die ersten Anschlagmittel ausbildenden Halteabschnitte 37 über die Aussenseite 17 der Montageschiene 11 und dringen anschliessend in den von der Montageöffnung gebildeten Freiraum ein. Die Anlageseiten 38 der Halteabschnitte 37 verhindern ein ungewolltes Lösen des Befestigungselementes 21 in der Vormontagestellung. In dieser Vormontagestellung ist das Befestigungselement 21 weiterhin entlang der Montageöffnung 15 verschiebbar. Zudem ist in der Vormontagestellung aufgrund der leicht klemmenden Wirkung zwischen den freien Rändern 14 der Montageöffnung 15 und dem Einführabschnitt 24 der Spannflächen 23 des Hintergreifabschnitts 22 eine Selbsthemmung des Befestigungselementes 21 an der Montageschiene 11 vorhanden.

Das in Bezug auf die Figur 1 rechte Befestigungselement 21 ist in seiner Fixierstellung dargestellt. Zum Überführen des Befestigungselementes 21 in diese Stellung wird das Befestigungselement 21 weiter in Richtung des Uhrzeigersinns nochmals um etwa 45° verdreht, wobei die Klemmabschnitte 25 der Spannflächen 23 des Hintergreifabschnitts 22 unter die freien Enden der Ränder 14 der Montageöffnung 15 zu liegen kommen. Während dem Verdrehvorgang gleiten die freien Enden der, die zweiten Anschlagmittel ausbildenden Sicherungsabschnitte 39 über die Aussenseite 17 der Montageschiene 11 und dringen anschliessend in den von der Montageöffnung gebildeten Freiraum ein. Die Anlageseiten 40 der Sicherungsabschnitte 39 verhindern ein ungewolltes Lösen des Befestigungselementes 21 in der Fixierstellung. Aufgrund der erzeugten Klemmung ist das Befestigungselement 21 in dieser Fixierstellung sicher an der Montageschiene 11 fixiert. Die einander zugewandten Innenseiten der Ergreifabschnitte 42 an den Betätigungsabschnitten 41 des Befestigungselementes 21 bilden jeweils Anschläge aus, welche bei einem zu grossen Verdrehwinkel mit der Aussenseite der entsprechenden Seitenwand 12 der Montageschiene 11 in Anlage kommen.

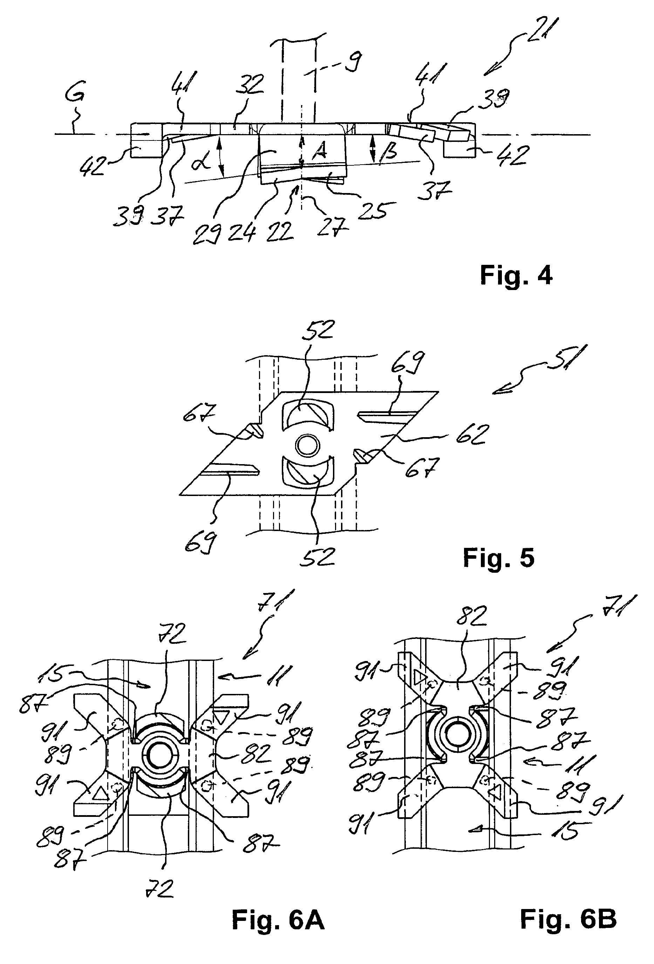

Das in Fig. 5 dargestellte Befestigungselement 51 weist im Unterschied zu dem zuvor beschriebenen Befestigungselement 21 als erstes Anschlagmittel an der Anschlagplatte 62 ausgebildete, in Richtung des Hintergreifabschnitts 52 ausgerichtete Vertiefungen 67, jeweils in Form einer Haltesicke, und als zweites Anschlagmittel an der Anschlagplatte 62 ausgebildete, in Richtung des Hintergreifabschnitts 52 ausgerichtete Vertiefungen 69 auf, jeweils in Form einer Sicherungssicke.

Das in den Figuren 6A und 6B gezeigte Befestigungselement 71 weist in der Aufsicht im Wesentlichen die Form eines Andreaskreuzes auf, wobei die von dem Anlageabschnitt 82 in dessen Ebene abragende Arme jeweils Betätigungsabschnitte 91 ausbilden. Die Betätigungsabschnitte 91 kommen im verspannten Zustand des Befestigungselementes 71 an der die Montageöffnung 15 benachbarten Aussenseite der Montageschiene 11 zu liegen (Fig. 6B).

Von dem Anlageabschnitt 82 ragen an dessen Aussenränder benachbart zu den Betätigungsabschnitten 91 dem Hintergreifabschnitt 72 zugewandte Nasen als Halteabschnitte 87 ab, welche ein erstes Anschlagmittel für eine hier nicht dargestellte Vormontagestellung des Befestigungselementes 71 ausbilden. An der Unterseite der Betätigungsabschnitte 91, benachbart zu dem Anlageabschnitt 82 sind ferner Erhebungen 89 als zweites Anschlagmittel vorgesehen, welche im verspannten Zustand des Befestigungselementes 71 in die Montageöffnung 15 eindringen und ein unbeabsichtigtes Lösen des an der Montageschiene 11 verspannten Befestigungselementes 71 verhindern. Vorteilhaft werden die Erhebungen 89 durch ein Prägeverfahren an dem Befestigungselement 71 ausgebildet. Anstelle jeweils einer Erhebung 89 an jedem Betätigungsabschnitt 91 können jeweils auch deren mehrere vorgesehen sein.

## Patentansprüche

1. Einteiliges Befestigungselement zur Anordnung eines Stangenelementes (9), das zumindest bereichsweise ein Gewinde aufweist, an einer Montageschiene (11) mit einem Hintergreifabschnitt (22; 52; 72) zum Einführen in die Montageöffnung (15) und Hintergreifen von Rändern (14) einer Montageöffnung (15) der Montageschiene (11), der zwei einander gegenüberliegende Spannflächen (23) aufweist, die im verspannten Zustand des Befestigungselementes (21; 51; 71) mit Abschnitten der Ränder (14) der Montageöffnung (15) in Anlage sind,
mit einem Anlageabschnitt (32; 62; 82) zur aussenseitigen Anlage an der Montageschiene (11), wobei der Hintergreifabschnitt (22; 52; 72) über einen Verbindungsabschnitt (29) mit dem Anlageabschnitt (32; 62; 82) in einem Abstand zu diesem verbunden ist, und
mit einer mit einem Innengewinde versehenen Öffnung (35) für den mit dem Gewinde versehenen Abschnitt des Stangenelementes (9), **dadurch gekennzeichnet, dass**
jede Spannfläche (23) des Hintergreifabschnitts (22; 52; 72) jeweils einen Einführabschnitt (24), der einen ersten Winkel α (Alpha) mit einer von dem Anlageabschnitt (32; 62; 82) aufgespannten Ebene (G) einschliesst, und einen daran anschliessenden Klemmabschnitt (25) aufweist, der einen zweiten Winkel β (Beta) mit der von dem Anlageabschnitt (32; 62; 82) aufgespannten Ebene (G) einschliesst, wobei der erste Winkel α (Alpha) grösser als der zweite Winkel β (Beta) ist.

2. Befestigungselement nach Anspruch 1, **dadurch gekennzeichnet, dass** eine zwischen dem Einführabschnitt (24) und dem Klemmabschnitt (25) verlaufende Übergangskante (26) am Hintergreifabschnitt (22; 52; 72) mit einer Längsachse (27) des Befestigungselementes (21) einen Winkel γ (Gamma) von 35° bis 55°, vorteilhaft von 40° bis 50° einschliesst.

3. Befestigungselement nach Anspruch 1 oder 2, **dadurch gekennzeichnet, dass** zumindest ein erstes Anschlagmittel zur Anlage an einer Innenseite (16) eines Randes (14) der Montageöffnung (15) in einer Vormontagestellung des Befestigungselementes (21; 51; 71) vorgesehen ist.

4. Befestigungselement nach Anspruch 3, **dadurch gekennzeichnet, dass** das erste Anschlagmittel von einem von dem Anlageabschnitt (32; 82) abragenden Halteabschnitt (37; 87) gebildet ist, der in einem Winkel dem Hintergreifabschnitt (22; 72) zugewandt ausgerichtet ist.

5. Befestigungselement nach einem der Ansprüche 1 bis 4, **dadurch gekennzeichnet, dass** zumindest ein zweites Anschlagmittel zur Anlage an einer Innenseite (16) eines Randes (14) der Montageöffnung (15) in einer Fixierstellung des Befestigungselementes (21; 51; 71) vorgesehen ist.

6. Befestigungselement nach Anspruch 5, **dadurch gekennzeichnet, dass** das zweite Anschlagmittel von einem von dem Anlageabschnitt (32) abragenden Sicherungsabschnitt (39) gebildet ist, der in einem Winkel dem Hintergreifabschnitt (22) zugewandt ausgerichtet ist.

7. Befestigungselement nach Anspruch 3 oder 5, **dadurch gekennzeichnet, dass** das erste Anschlagmittel und/oder das zweite Anschlagmittel von einer in Richtung des Hintergreifabschnitts ausgerichteten Vertiefung (67, 69; 89) gebildet ist.

8. Befestigungselement nach einem der Ansprüche 1 bis 7, **dadurch gekennzeichnet, dass** zumindest ein von dem Anlageabschnitt (32; 82) abragender, in der von dem Anlageabschnitt (32; 82) aufgespannten Ebene (G) verlaufender Betätigungsabschnitt (41; 91) vorgesehen ist.

9. Befestigungselement nach Anspruch 8, **dadurch gekennzeichnet, dass**, mehrere Betätigungsabschnitte (41; 91) vorgesehen sind, die an einander diametral gegenüberliegenden Bereichen des Anlageabschnitts (32; 82) vorgesehen sind.

## Claims

1. A one-piece fastening element for fitting a bar element (9), which has a screw thread at least in certain areas, to a mounting rail (11), said fastening element having a rear-engagement portion (22; 52; 72) for insertion into the mounting aperture (15) so as to engage behind edges (14) of a mounting aperture (15) of the mounting rail (11) and having two opposed clamping faces (23), which, in the clamped state of the fastening element (21; 51; 71), rest against portions of the edges (14) of the mounting aperture (15), said fastening element comprising a contact portion (32; 62; 82) for resting against the outside of the mounting rail (11), and the rear-engagement portion (22; 52; 72) being connected to the contact portion (32; 62; 82) at a distance from said contact portion (32; 62; 82) via a connecting portion (29), and said fastening element having an opening (35) provided with an inner thread for the threaded portion of the bar element (9), **characterized in that** each clamping face (23) of the rear-engagement portion (22; 52; 72) has an insert portion (24) forming a first angle α (alpha) with a plane (G) defined by the contact portion (32; 62; 82), and an adjoining clamping portion (25) forming a second angle β (beta) with the plane (G) defined by the contact portion (32; 62; 82), the first angle α (alpha) being larger than the second angle β (beta).

2. A fastening element according to Claim 1, **characterized in that** a transitional edge (26) on the rear-engagement portion (22; 52; 72), extending between the insert portion (24) and the clamping portion (25), forms an angle γ (gamma) of 35° to 55°, and preferably 40° to 50°, with a longitudinal axis (27) of the fastening element (21).

3. A fastening element according to Claim 1 or 2, **characterized in that** at least a first stop means is provided for placement against the inner side (16) of an edge (14) of the mounting aperture (15) in a pre-assembly position of the fastening element (21; 51; 71).

4. A fastening element according to Claim 3, **characterized in that** the first stop means is formed by a retaining portion (37; 87) which projects from the contact portion (32; 82) and is oriented at an angle facing the rear-engagement portion (22; 72).

5. A fastening element according to one of Claims 1 to 4, **characterized in that** at least a second stop means is provided for placement against an inner side (16) of an edge (14) of the mounting aperture (15) in a fixing position of the fastening element (21; 51; 71).

6. A fastening element according to Claim 5, **characterized in that** the second stop means is formed by a safety portion (39), projecting from the contact portion (32) and oriented at an angle facing the rear-engagement portion (22).

7. A fastening element according to Claim 3 or 5, **characterized in that** the first stop means and/or the second stop means are formed by a recess (67, 69; 89) oriented towards the rear-engagement portion.

8. A fastening element according to one of Claims 1 to 7, **characterized in that** at least one operating portion (41; 91) is provided, which projects from the contact portion (32; 82) and extends in the plane (G) defined by the contact portion (32; 82).

9. A fastening element according to Claim 8, **characterized in that** a number of operating portions (41; 91) are provided and are located in regions of the contact portion (32; 82) lying diametrically opposite one another.

## Revendications

1. Elément de fixation monobloc destiné à agencer un élément de barre (9) muni d'un filetage au moins dans certaines zones, sur un rail de montage (11) comportant une partie de prise arrière (22 ; 52 ; 72) pour une insertion dans une ouverture de montage (15) *du rail de montage* (*11*) et une prise arrière par des bords (14) de l'ouverture de montage (15) du rail de montage (11), laquelle partie de prise arrière comporte deux surfaces de serrage opposées (23) qui, à l'état serré, sont en contact avec des parties des bords (14) de l'ouverture de montage (15),
une partie de contact (32 ; 62 ; 82) destinée à venir en contact avec le rail de montage (11) du côté extérieur, la partie de prise arrière (22 ; 52 ; 72) étant reliée à la partie de contact (32 ; 62 ; 82) par l'intermédiaire d'une partie de liaison (29) à une certaine distance de celle-ci, et
une ouverture (35) munie d'un filetage intérieur pour la partie de l'élément de barre (9) munie du filetage, **caractérisé en ce que**
chaque surface de serrage (23) de la partie de prise arrière (22 ; 52 ; 72) comporte respectivement une partie d'insertion (24) formant un premier angle α (alpha) par rapport à un plan (G) défini par la partie de contact (32 ; 62 ; 82), et une partie de serrage (25) adjacente à celle-ci et formant un second angle β (bêta) par rapport au plan (G) défini par la partie de contact (32 ; 62 ; 82), dans lequel le premier angle α (alpha) est plus grand que le second angle β (bêta).

2. Elément de fixation selon la revendication 1, **caractérisé en ce qu'**une arête de transition (26) s'étendant entre la partie d'insertion (24) et la partie de serrage (25) sur la partie de prise arrière (22 ; 52 ; 72) forme un angle γ (gamma) de 35° à 55°, de manière préférée de 40° à 50°, par rapport à un axe longitudinal (27) de l'élément de fixation (21).

3. Elément de fixation selon la revendication 1 ou 2, **caractérisé en ce qu'**au moins des premiers moyens de butée sont destinés à venir en contact avec un côté intérieur (16) d'un bord (14) de l'ouverture de montage (15) dans une position de pré-montage de l'élément de fixation (21 ; 51 ; 71).

4. Elément de fixation selon la revendication 3, **caractérisé en ce que** les premiers moyens de butée sont formés par une partie de retenue (37 ; 87) faisant saillie à partir de la partie de contact (32 ; 82), laquelle partie de retenue est dirigée vers la partie de prise arrière (22 ; 72) avec un certain angle.

5. Elément de fixation selon l'une des revendications 1 à 4, **caractérisé en ce que** au moins des seconds moyens de butée sont destinés à venir en contact avec un côté intérieur (16) d'un bord (14) de l'ouverture de montage (15) dans une position de fixation de l'élément de fixation (21 ; 51 ; 71).

6. Elément de fixation selon la revendication 5, **caractérisé en ce que** les seconds moyens de butée sont formés par une partie d'arrêt (39) faisant saillie à partir de la partie de contact (32), laquelle partie d'arrêt est dirigée vers la partie de prise arrière (22) avec un certain angle.

7. Elément de fixation selon la revendication 3 ou 5, **caractérisé en ce que** les premiers moyens de butée et/ou les seconds moyens de butée sont formés par un évidement (67, 69 ; 89) dirigé vers la partie de prise arrière.

8. Elément de fixation selon l'une des revendications 1 à 7, **caractérisé en ce qu'**est prévue au moins une partie d'actionnement (41 ; 91) s'étendant dans le plan (G) défini par la partie de contact (32 ; 82) et faisant saillie à partir de la partie de contact (32 ; 82).

9. Elément de fixation selon la revendication 8, **caractérisé en ce que** sont prévues plusieurs parties d'actionnement (41 ; 91) qui sont destinées à des zones de la partie de contact (32 ; 82) diamétralement opposées l'une à l'autre.
